# EUROPEAN PATENT APPLICATION

(11) **EP 4 826 433 A1**
(43) Date of publication of application: **21.10.2026**
(21) Application number: 24702869.9
(22) Date of filing: 12.01.2024
(51) Int. Cl.: G02B 27/01, B60K 35/23

(54) **DISPLAY MODULE, AND FIELD-OF-VIEW DISPLAY DEVICE USED IN VEHICLE**

(30) Priority: 14.12.2023 CN 202311726064
(71) Applicant: Wuhan China Star Optoelectronics Technology Co., Ltd., Wuhan, Hubei 430079 (CN)
(72) Inventor: GUAN, Yantao, Wuhan Hubei 430079 (CN); LIU, Kun, Wuhan Hubei 430079 (CN); LIU, Fancheng, Wuhan Hubei 430079 (CN); ZHA, Guowei, Wuhan Hubei 430079 (CN)
(74) Representative: Nederlandsch Octrooibureau
(86) International application number: PCT/CN2024/072090
(87) International publication number: WO 2025/123459

(57) **Abstract**

The application discloses a display module and a field-of-view display device for a vehicle in which a light-emitting function layer in the display module has a centerline perpendicular to a first direction. The dimming main optical axis resulted from the main optical axis of the first light-emitting units passing through the corresponding first dimming units coincide with the main optical axis of the first light-emitting units. The dimming main optical axis resulted from the main optical axis of the second light-emitting units passing through the corresponding second dimming units are disposed close to the centerline with respect to the main optical axis of the second light-emitting units.

## Description

### TECHNICAL FIELD

The present application relates to a field of display technology, and more particularly, to a display module and a field-of-view display device for a vehicle.

### BACKGROUND

In the early years, Head Up Displays (HUDs) were flight assistance instruments applied to aircrafts. Nowadays, HUDs are widely used in automobiles, the principle of which is that an image on a display screen is reflected by one or two mirrors to be projected onto a windshield of an automobile, forming a high-brightness virtual image in front of a human eye.

Because of the distance between the human eye and the virtual image and the size of the display screen, the larger the angle of view, the lower the brightness of an edge area of the display image seen by the human eye. That is, the brightness of a middle area of the display image seen by the human eye is brighter, and the brightness of the edge area of the display image seen by the human eye is gradually dimmed. Therefore, how to improve a brightness uniformity of the display image seen by the human eye is an urgent problem to be solved.

### SUMMARY OF THE INVENTION

The present application provides a display module and a field-of-view display device for use in a vehicle to improve brightness uniformity of a display image seen by a human eye.

In one aspect, an embodiment of the present application provides a display module including a light-emitting function layer and a plurality of dimming units, the light-emitting function layer including a substrate and a plurality of light-emitting units disposed on the substrate and arranged in an array, wherein the light-emitting function layer comprises a center display area and two edge display areas, the light-emitting function layer is configured such that one of the edge display areas, the center display area and the other one of the edge display areas are sequentially arranged in a first direction, the plurality of light-emitting units comprises one or more first light-emitting units and one or more second light-emitting units, the one or more first light-emitting units being located in the center display area, and the one or more second light-emitting units being located in the edge display areas; the plurality of dimming units disposed on a light-emitting surface of the light-emitting function layer and comprising one or more first dimming units and one or more second dimming units, the one or more first dimming units each corresponding to one of the one or more first light-emitting units and the one or more second dimming units each corresponding to one of the one or more second light-emitting units; wherein the light-emitting function layer has a centerline perpendicular to the first direction on a plane in which the light-emitting function layer is located; a dimming main optical axis resulted from a main optical axis of the first light-emitting unit passing through the corresponding first dimming unit coincides with the main optical axis of the first light-emitting unit; a dimming main optical axis resulted from a main optical axis of the second light-emitting unit passing through the second dimming unit is disposed close to the centerline with respect to the main optical axis of the corresponding second light-emitting unit.

In another aspect, the present application further provides a field-of-view display device for a vehicle, wherein the field-of-view display device includes a display module and a windshield for reflecting light from the display module to an eye box, the display module includes a light-emitting function layer including a substrate and a plurality of light-emitting units disposed on the substrate and arranged in an array, wherein the light-emitting function layer comprises a center display area and two edge display areas, the light-emitting function layer is configured such that one of the edge display areas, the center display area and the other one of the edge display areas are sequentially arranged in a first direction, the plurality of light-emitting units comprises one or more first light-emitting units and one or more second light-emitting units, the one or more first light-emitting units being located in the center display area, and the one or more second light-emitting units being located in the edge display areas; a plurality of dimming units disposed on a light-emitting surface of the light-emitting function layer and comprising one or more first dimming units and one or more second dimming units, the one or more first dimming units each corresponding to one of the one or more first light-emitting units and the one or more second dimming units each corresponding to one of the one or more second light-emitting units; wherein the light-emitting function layer has a centerline perpendicular to the first direction on a plane in which the light-emitting function layer is located; a dimming main optical axis resulted from a main optical axis of the first light-emitting unit passing through the corresponding first dimming unit coincides with the main optical axis of the first light-emitting unit; a dimming main optical axis resulted from a main optical axis of the second light-emitting unit passing through the second dimming unit is disposed close to the centerline with respect to the main optical axis of the corresponding second light-emitting unit.

### BRIEF DESCRIPTION OF THE DRAWINGS

FIG. 1 is a schematic diagram showing structure of a display module according to a first embodiment of the present application;
FIG. 2a is a schematic diagram of an imaging principle of a display module in the prior art;
FIG. 2b is a schematic diagram of an imaging principle of a display module according to an embodiment of the present application;
FIG. 3a is a schematic diagram showing brightness of a display image seen by a human eye in a display module in the prior art;
FIG. 3b is a schematic diagram showing brightness of a display image seen by a human eye in a display module provided in an embodiment of the present application;
FIG. 4 is a schematic diagram showing structure of a display module according to a second embodiment of the present application;
FIG. 5 is a schematic diagram showing a first structure of a display module according to a third embodiment of the present application;
FIG. 6 is a schematic diagram showing a second structure of a display module according to the third embodiment of the present application;
FIG. 7 is a schematic diagram showing a first structure of a display module according to a fourth embodiment of the present application;
FIG. 8 is a schematic diagram showing a second structure of a display module according to the fourth embodiment of the present application;
FIG. 9 is a schematic diagram showing structure of a display module according to a fifth embodiment of the present application;
FIG. 10 is a schematic diagram showing structure of a display module according to a sixth embodiment of the present application;
FIG. 11 is a schematic diagram showing structure of a display module according to a seventh embodiment of the present application.

### DETAILED DESCRIPTION OF THE EMBODIMENTS

The technical solution in the embodiments of the present application will be described below in connection with the accompanying drawings in the embodiments of the present application. The described technical solution is for the purpose of explanation and description of the idea of the application only, and should not be construed as limiting the scope of protection of the application.

Embodiments of the present application provide a display module including a light-emitting function layer and a plurality of dimming units. The light-emitting function layer including a substrate and a plurality of light-emitting units disposed on the substrate and arranged in an array, wherein the light-emitting function layer includes a center display area and two edge display areas, the light-emitting function layer is configured such that one of the edge display areas, the center display area and the other one of the edge display areas are sequentially arranged in a first direction, the plurality of light-emitting units includes one or more first light-emitting units and one or more second light-emitting units, the one or more first light-emitting units being located in the center display area, and the one or more second light-emitting units being located in the edge display areas; and a plurality of dimming units disposed on a light-emitting surface of the light-emitting function layer and including one or more first dimming units and one or more second dimming units, the one or more first dimming units each corresponding to one of the one or more first light-emitting units and the one or more second dimming units each corresponding to one of the one or more second light-emitting units; wherein the light-emitting function layer has a centerline perpendicular to the first direction on a plane in which the light-emitting function layer is located; a dimming main optical axis resulted from a main optical axis of the first light-emitting unit passing through the corresponding first dimming unit coincides with the main optical axis of the first light-emitting unit; a dimming main optical axis resulted from a main optical axis of the second light-emitting unit passing through the second dimming unit is disposed close to the centerline with respect to the main optical axis of the corresponding second light-emitting unit.

The one or more first dimming units each include one or more first lenses, the one or more second dimming units each include one or more second lenses, the first lenses and the second lenses are identical in structure, the plurality of light-emitting units include one or more first light-emitting unit groups and one or more second light-emitting unit groups, the one or more first light-emitting unit groups each include a plurality of the first light-emitting units arranged at intervals in a second direction, the one or more second light-emitting unit groups each include a plurality of second light-emitting units arranged at intervals in the second direction, and the edge display areas each include a plurality of the second light-emitting unit groups arranged in sequence in the first direction; the first direction and the second direction are both located on the plane in which the light-emitting function layer is located, and the second direction is perpendicular to the first direction; and wherein a center of the second lens is offset from the main optical axis of the corresponding second light-emitting unit towards the centerline in the first direction by an offset distance w, and the offset distances w of the centers of the second lenses from the main optical axis of the corresponding plurality of second light-emitting units in the same second light-emitting unit group are equal.

The display module includes any two of the second light-emitting unit groups in the first direction, wherein the offset distance w of the second light-emitting unit in the second light-emitting unit group away from the center display area is greater than the offset distance w of the other second light-emitting unit in the second light-emitting unit group close to the center display area.

In the k-th one of the second light-emitting unit groups arranged in a direction away from the center display area, the offset distance is obtained according to the following formula: w = *a*/(m/2)*(k-1).

Wherein a denotes a target distance by which a dimming main optical axis resulted from the main optical axis of the second light-emitting unit in the second light-emitting unit group farthest from the center display area passing through the corresponding second dimming unit is offset away from the centerline in the first direction with respect to an orthographic projection of the main optical axis of the second light-emitting unit on the substrate, m denotes a total number of the light-emitting units arranged at intervals in the first direction on the light-emitting function layers, and k denotes the k-th one of the second light-emitting unit groups arranged in the direction away from the center display area.

The two edge display areas are respectively a first display area and a second display area, the center display area is located between the first display area and the second display area, and the one or more second light-emitting units located in the first display area are mirror-symmetric with the one or more second light-emitting units located in the second display area with respect to the centerline; and a distribution of offset angles of the dimming main optical axis of the second lenses at both sides of the centerline with respect to the main optical axis of the corresponding second light-emitting units is mirror-symmetrical with respect to the centerline.

Each of the first display area and the second display area includes a plurality of sub-display areas arranged at intervals in the first direction, each of the plurality of sub-display areas is provided with N second light-emitting unit groups of the second light-emitting unit groups, the offset distances w of the plurality of second light-emitting units located in the same sub-display area are equal, and N is a positive integer greater than or equal to 2; and in the first direction, the offset distance w of the second light-emitting unit in the sub-display area further away from the center display area is larger.

When N is an odd number, the offset distances w of the plurality of the second light-emitting units in the same sub-display area are equal to the offset distances w of the second light-emitting units in the second light-emitting unit group located in the center of the sub-display area; and when N is an even number, the offset distances w of the plurality of the second light-emitting units in the same sub-display area are equal to an average value of the offset distances w of the second light-emitting units in the N second light-emitting unit groups located in the sub-display area.

The number of the second light-emitting unit groups provided in the sub-display area further away from the center display area is larger.

The one or more first light-emitting unit groups each correspond to at least one of the one or more first lenses, and the one or more second light-emitting unit groups each correspond to at least one of the one or more second lenses.

An orthographic projection of the first lens on the substrate covers orthographic projections of the plurality of first light-emitting units in the first light-emitting unit group on the substrate, and an orthographic projection of the second lens on the substrate covers orthographic projections of the plurality of second light-emitting units in the second light-emitting unit group on the substrate.

Each first lens includes a first sub-lens and a second sub-lens, wherein an orthographic projection of the first sub-lens on the substrate covers the orthographic projections of at least two of the first light-emitting units in the first light-emitting unit group on the substrate, and an orthographic projection of the second sub-lens on the substrate covers the orthographic projection of one of the first light-emitting units in the first light-emitting unit group on the substrate; and/or, the second lens includes a third sub-lens and a fourth sub-lens, wherein an orthographic projection of the third sub-lens on the substrate covers the orthographic projections of at least two of the second light-emitting units in the second light-emitting unit group on the substrate, and an orthographic projection of the fourth sub-lens on the substrate covers the orthographic projection of one of the second light-emitting units in the second light-emitting unit group on the substrate.

A shape of the lens includes at least one of a cylinder, a cone, a circular cone, and a trapezoid.

The one or more first dimming units each include a first lens, the one or more second dimming units each include a second lens, vector vertices of the first lens and the second lens have different positions, an orthographic projection of the vector vertex of the first lens on the substrate coincides with an orthographic projection of the main optical axis of the corresponding first light-emitting unit on the substrate, and an orthographic projection of the vector vertex of the second lens on the substrate is located on a side of an orthographic projection of the main optical axis of the corresponding second light-emitting unit on the substrate close to the centerline.

The present application also provides a field of view display device for a vehicle, wherein the field of view display device includes a display module and a windshield for reflecting light from the display module to an eye box, the display module including:

a light-emitting function layer including a substrate and a plurality of light-emitting units disposed on the substrate and arranged in an array, wherein the light-emitting function layer includes a center display area and two edge display areas, the light-emitting function layer is configured such that one of the edge display areas, the center display area and the other one of the edge display areas are sequentially arranged in a first direction, the plurality of light-emitting units includes one or more first light-emitting units and one or more second light-emitting units, the one or more first light-emitting units being located in the center display area, and the one or more second light-emitting units being located in the edge display areas;

a plurality of dimming units disposed on a light-emitting surface of the light-emitting function layer and including one or more first dimming units and one or more second dimming units, the one or more first dimming units each corresponding to one of the one or more first light-emitting units and the one or more second dimming units each corresponding to one of the one or more second light-emitting units; wherein the light-emitting function layer has a centerline perpendicular to the first direction on a plane in which the light-emitting function layer is located; a dimming main optical axis resulted from a main optical axis of the first light-emitting unit passing through the corresponding first dimming unit coincides with the main optical axis of the first light-emitting unit; a dimming main optical axis resulted from a main optical axis of the second light-emitting unit passing through the second dimming unit is disposed close to the centerline with respect to the main optical axis of the corresponding second light-emitting unit.

The one or more first dimming units each include one or more first lenses, the one or more second dimming units each include one or more second lenses, the first lenses and the second lenses are identical in structure, the plurality of light-emitting units include one or more first light-emitting unit groups and one or more second light-emitting unit groups, the one or more first light-emitting unit groups each include a plurality of the first light-emitting units arranged at intervals in a second direction, the one or more second light-emitting unit groups each include a plurality of second light-emitting units arranged at intervals in the second direction, and the edge display areas each include a plurality of the second light-emitting unit groups arranged in sequence in the first direction; the first direction and the second direction are both located on the plane in which the light-emitting function layer is located, and the second direction is perpendicular to the first direction; and wherein a center of the second lens is offset from the main optical axis of the corresponding second light-emitting unit towards the centerline in the first direction by an offset distance w, and the offset distances w of the centers of the second lenses from the main optical axis of the corresponding plurality of second light-emitting units in the same second light-emitting unit group are equal..

The field-of-view display device for a vehicle including any two of the second light-emitting unit groups in the first direction, wherein the offset distance w of the second light-emitting unit in the second light-emitting unit group away from the center display area is greater than the offset distance w of the other second light-emitting unit in the second light-emitting unit group close to the center display area.

In the k-th one of the second light-emitting unit groups arranged in a direction away from the center display area, the offset distance is obtained according to the following formula: w =*a*/(m/2)*(k-1).

Wherein a denotes a target distance by which a dimming main optical axis resulted from the main optical axis of the second light-emitting unit in the second light-emitting unit group farthest from the center display area passing through the corresponding second dimming unit is offset away from the centerline in the first direction with respect to an orthographic projection of the main optical axis of the second light-emitting unit on the substrate, m denotes a total number of the light-emitting units arranged at intervals in the first direction on the light-emitting function layers, and k denotes the k-th one of the second light-emitting unit groups arranged in the direction away from the center display area.

The two edge display areas are respectively a first display area and a second display area, the center display area is located between the first display area and the second display area, and the one or more second light-emitting units located in the first display area are mirror-symmetric with the one or more second light-emitting units located in the second display area with respect to the centerline; and a distribution of offset angles of the dimming main optical axis of the second lenses at both sides of the centerline with respect to the main optical axis of the corresponding second light-emitting units is mirror-symmetrical with respect to the centerline.

Each of the first display area and the second display area includes a plurality of sub-display areas arranged at intervals in the first direction, each of the plurality of sub-display areas is provided with N second light-emitting unit groups of the second light-emitting unit groups, the offset distances w of the plurality of second light-emitting units located in the same sub-display area are equal, and N is a positive integer greater than or equal to 2; and in the first direction, the offset distance w of the second light-emitting unit in the sub-display area further away from the center display area is larger.

When N is an odd number, the offset distances w of the plurality of the second light-emitting units in the same sub-display area are equal to the offset distances w of the second light-emitting units in the second light-emitting unit group located in the center of the sub-display area; and when N is an even number, the offset distances w of the plurality of the second light-emitting units in the same sub-display area are equal to an average value of the offset distances w of the second light-emitting units in the N second light-emitting unit groups located in the sub-display area.

In the display module and the field-of-view display device for a vehicle, the dimming main optical axis resulted from the main optical axis of the first light-emitting units passing through the corresponding first dimming units coincide with the orthographic projections of the main optical axis of the first light-emitting units on the substrate, and the dimming main optical axis resulted from the main optical axis of the second light-emitting units passing through the corresponding second dimming units are disposed close to the centerline with respect to the orthographic projections of the main optical axis of the second dimming units on the substrate. Thereby, the brightness uniformity of the light-emitting function layer with the dimming unit is greatly improved in a narrow angle of view range, relative to a light-emitting function layer without dimming unit, and the brightness at an angle of view of 10° is about 65% the brightness at 0°. And the overall brightness is also increased so that the display brightness of the edge display area in the narrow angle of view range is greater than or equal to 90% of the display brightness of the center display area.

The various embodiments provided herein are similar, and features in different embodiments can be combined with each other.

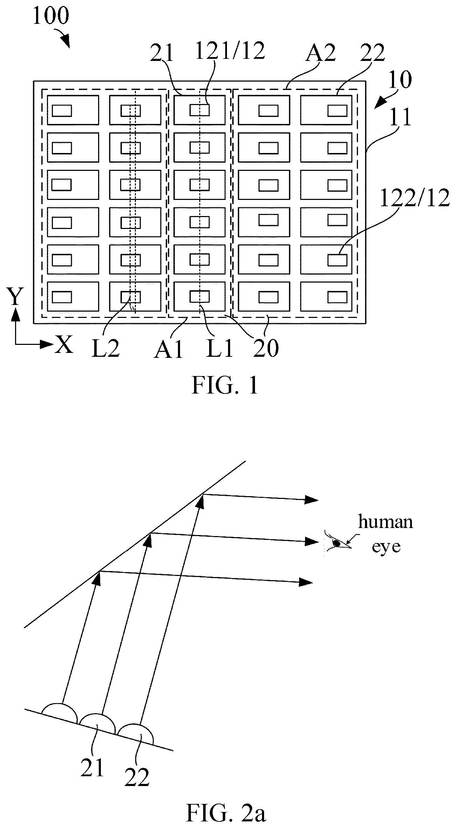

As shown in FIG. 1, an embodiment of the present application provides a display module 100 including a light-emitting function layer 10 and a plurality of dimming units 20. The light-emitting function layer 10 includes a substrate 11 and a plurality of light-emitting units 12 disposed on the substrate 11 and arranged in an array. The light-emitting function layer 10 includes a center display area A1 and two edge display areas A2. The light-emitting function layer 10 is configured such that one of the edge display areas A2, the center display area A1 and another of the edge display areas A2 are sequentially arranged in an order in a first direction X. The plurality of light-emitting units 12 include first light-emitting units 121 located in the center display area A1 and second light-emitting units 122 located in the edge display areas A2. The plurality of dimming units 20 including first dimming units 21 corresponding to the first light-emitting units 121 and second dimming units 22 corresponding to the second light-emitting units 122 are provided on the light-emitting surface of the light-emitting function layer 10. In the horizontal plane in which the light-emitting function layer 10 is located, the light-emitting function layer 10 has a centerline L1 perpendicular to the first direction X. The dimming main optical axis resulted from the main optical axis of one of the first light-emitting units 121 passing through the first dimming unit 21 coincides with the main optical axis of the corresponding first light-emitting unit 121. The dimming main optical axis resulted from the main optical axis of one of the second light-emitting units 122 passing through the corresponding second dimming unit 22 is closer to the centerline with respect to the main optical axis of the second light-emitting unit 122.

In the display module provided in the present application, the dimming main optical axis resulted from the main optical axis of each first light-emitting unit 121 passing through the first dimming unit 21 coincides with the main optical axis of the corresponding first light-emitting unit 121. The dimming main optical axis resulted from the main optical axis of each second light-emitting unit 122 passing through the second dimming unit 22 is closer to the centerline with respect to the main optical axis of the corresponding second light-emitting unit 122. Thereby, a brightness uniformity of the light-emitting function layer with the dimming units arranged is greatly improved in the narrow angle of view range, relative to a light-emitting function layer without any dimming unit, and the brightness at an angle of view of 10° is about 65% the brightness at 0°. And the overall brightness is also increased so that the display brightness of the edge display area in the narrow angle of view range is greater than or equal to 90% of the display brightness of the center display area.

In an embodiment of the present application, the display module is a HUD display module applied to an automobile, or a head-up display module. A HUD is a device that projects instrument information (such as speed), navigation information, and the like in front of a driver's field of view. The driver can see the instrument information and the navigation information in front of the field of view, and does not need to look down at an instrument panel or a central display screen which is below the steering wheel, so that the driver's brake reaction time in an emergency can be shortened, and the driving safety can be improved.

In the embodiment of the present application, the first dimming units 21 each include a first lens 21, and the second dimming units 22 each include a second lens 22. The first lens 21 and the second lens 22 are identical in structure and may be conventional convex lenses. The plurality of light-emitting units 12 include a first light-emitting unit group including a plurality of first light-emitting units 121 arranged at intervals along a second direction Y, and a second light-emitting unit group including a plurality of second light-emitting units 122 arranged at intervals along the second direction Y. The edge display areas A2 each include a plurality of second light-emitting unit groups sequentially arranged in the first direction X. The second direction Y is perpendicular to the first direction X. Wherein the first direction X is a width direction of the light-emitting function layer, and the second direction Y is a length direction of the light-emitting function layer.

In the first direction X, the center of the second lens 22 is offset from the main optical axis of the corresponding second light-emitting unit 122 towards the centerline L1by an offset distance w. The offset distances w between the main optical axis corresponding to the plurality of second light-emitting units 122 in the same second light-emitting unit group and the centers of the corresponding second lenses 22 are equal.

In the first direction X, any two second light-emitting unit groups are arranged, where the offset distance w of each of the second light-emitting units 122 in the second light-emitting unit group further away from the center display area A1 is greater than the offset distance w of each of the second light-emitting units 122 in the other second light-emitting unit groups closer to the center display area A1.

In the embodiment of the present application, the first lenses 21 are provided in a one-to-one correspondence with the first light-emitting units 121, and the second lenses 22 are provided in a one-to-one correspondence with the second light-emitting units 122. That is, the orthographic projection of the first lenses 21 on the substrate 11 covers the orthographic projection of the first light-emitting units 121 on the substrate 11. The orthographic projection of the second lenses 22 on the substrate 11 covers the orthographic projection of the second light-emitting units 121 on the substrate 11. And the orthographic projection of the main optical axis of each second lens 22 on the substrate 11 is located on the side of the orthographic projection of the main optical axis of the corresponding second light-emitting unit 122 on the substrate 11 close to the centerline L1.

In an embodiment of the present application, the center display area A1 includes at least one first light-emitting unit group. Specifically, the resolution of the light-emitting function layer 10 is W*H, that is, the light-emitting function layer 10 includes W rows of light-emitting units 12 arranged at intervals along the second direction Y and H columns of light-emitting units 12 arranged at intervals along the first direction X. If H is an odd number, the center display area A1 includes an odd number of first light-emitting unit group(s), for example, 1 first light-emitting unit group, 3 first light-emitting unit groups, 5 first light-emitting unit groups, 7 first light-emitting unit groups, 9 first light-emitting unit groups .... Preferably, the center display area A1 includes 1 first light-emitting unit group. If H is an even number, the center display area A1 includes an even number of first light-emitting unit groups, for example, 2 first light-emitting unit groups, 4 first light-emitting unit groups, 6 first light-emitting unit groups, 8 first light-emitting unit groups, 10 first light-emitting unit groups .... Preferably, the center display area A1 includes 2 first light-emitting unit groups.

In the embodiment of the present application, the two edge display areas A2 include a first display area and a second display area, and the center display area A1 is located between the first display area and the second display area. A plurality of second light-emitting units 121 located in the first display area and a plurality of second light-emitting units 121 located in the second display area are mirror-symmetrical with respect to the centerline L1. The distribution of the light emitted from the second lenses 22 on both sides of the centerline L1 with respect to the offset angle of the main optical axis of the corresponding second light-emitting unit 122 are mirror-symmetric.

In an embodiment of the present application, the edge display areas A2 each include a plurality of second light-emitting unit groups arranged at intervals in the first direction X. And the offset distances w of the plurality of second light-emitting units 121 located in one same second light-emitting unit group are equal.

In the embodiment of the present application, in the first direction X, the second light-emitting unit 122 further away from the center display area A1 has a larger offset distance w.

In the embodiment of the present application, for example, the pitch of one light-emitting unit group is 200 microns, and the diameters of the corresponding lenses 20 is 200 microns (100 microns in radius). The offset distances w of the plurality of second light-emitting units 121 in the second light-emitting unit group adjacent to the center display area A1 in the first direction X are between 1.5 microns and 2.5 microns. Preferably, the distances are 2 microns. If the angles between the light rays emitted from the first light-emitting units 121 through the corresponding lenses 20 and the central axis in the vertical direction of the lenses 20 are 0 degree, the angles between the light rays emitted from the second light-emitting units 121 through the corresponding lenses 20 and the central axis in the vertical direction of the lenses 20 are between 0.5 degrees and 1.5 degrees, and if the distance is 2 microns, the angles between the light rays are 1 degree. Besides, the difference between the offset distance w of the plurality of second light-emitting units 121 in the k-th one of the second light-emitting unit groups arranged in the direction away from the center display area A1 and the offset distance w of the plurality of second light-emitting units 121 in the (k-1)-th one of the second light-emitting unit groups is 2 microns. Specifically, the value of the distance may be adjusted according to the actual screen resolution, and the value range of the distance includes 2 nm to 20,000 nm.

In the embodiment of the present application, the offset distance, by which the center of the orthographic projection of the second light-emitting unit in the k-th one of the second light-emitting unit groups arranged away from the center display area A1 is offset from the center of orthographic projection of the corresponding second lens on the substrate towards the centerline in the first direction, is obtained according to the following formula: w = *a*/(m/2)*(k-1).

Wherein a denotes a target distance by which a dimming main optical axis resulted from the main optical axis of the second light-emitting unit 122 in the second light-emitting unit group farthest from the center display area A1 passing through the corresponding second dimming unit 22 is offset towards the centerline in the first direction X with respect to the orthographic projection of the main optical axis of the second light-emitting unit 122 on the substrate 11, m denotes the total number of the light-emitting units 12 arranged at intervals on the light-emitting function layers 10 are arranged in the first direction X, and k denotes the index of the k-th second light-emitting unit group arranged in the direction away from the center display area A1.

For example, the width of the light-emitting function layer 10 is 200 microns, the total number m of the light-emitting units 12 arranged at intervals along the first direction X on the light-emitting function layer 10 is 650 (the sum of those in the first light-emitting unit group(s) and in the second light-emitting unit group(s)), the target distance a of the second light-emitting units 121 in the second light-emitting unit group farthest from the center display area A1 is 5 microns according to some simulation results , and it can be determined that the offset distance w of the second light-emitting units 121 in the second (k=2) light-emitting unit group arranged in a direction away from the center display area A1 is w=5/(650/2) *1=15.4 nm. The resolution and the size of the light-emitting function layer 10 are different, and the value of the corresponding offset distance w is different. Generally, a/(m/2) ranges from 2 nm to 1000 nm, for example, a/(m/2) includes 2 nm, 3 nm, 5 nm, 10 nm, 15 nm, 20 nm, 25 nm, 30 nm ... 100 nm, 200 nm, ... 500 nm, 600 nm ... 800 nm, 900 nm, 1000 nm, etc.

In an embodiment of the present application, a shape of the lens 20 includes at least one of a cylinder, a cone, a circular cone, and a trapezoid.

In the embodiment of the present application, the display module further includes an optical imaging unit for transmitting the light emitted by the light-emitting function layer 10 to the windshield, and the light reflected by the windshield forms a virtual image at the first preset position along a line reversely extended from the light. The larger the angle of field of view between the eye box, which is the area where the eyes of the driver are located, and the edge of the virtual image is, the larger the offset distance w of the second light-emitting unit 121 further away from the center display area A1 is.

As shown in FIG. 2a, in the conventional display module, the light emitted through the first lens 21 and the light emitted through the second lens 22 are parallel light. And the parallel light is emitted toward the human eye after being reflected by the windshield, so that the brightness of the center display area of the display image seen by the human eye is brighter, and the brightness of the edge display area of the display image seen by the human eye is gradually dimmed.

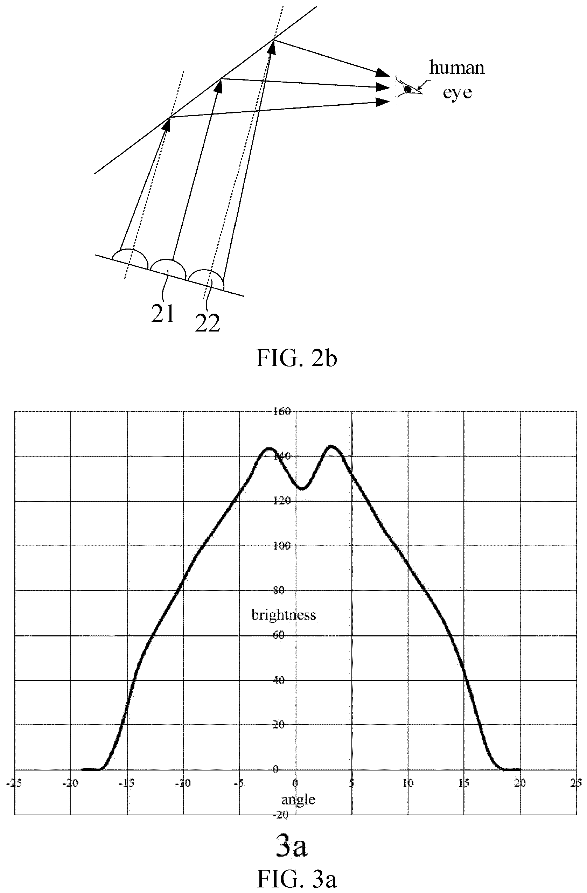

As shown in FIG. 2b, in the display module provided in the embodiment of the present invention, the angle of the light emitted through the second lens 22 by the second light-emitting unit 121 which has been offset in the direction away from the center display area is changed (emitted in the direction towards the central axis of the second lens 22), and the light is converged in the direction towards the light emitted by the first lens 21 after being reflected by the windshield, so that the brightness of the center display area and the edge display area of the display image seen by the human eye tends to be consistent.

As shown in FIG. 3a, with regard to the display brightness of the display image seen by the human eye in the conventional display module, when the display brightness of the center display area A1 is 120 to 140 candelas per square meter, the display brightness of the edge display area A2 (for example, the display brightness corresponding to ± 10° ) is 80 to 95 candelas per square meter. That is, the display brightness of the center display area A1 differs greatly from the display brightness of the edge display area A2 (the display brightness of the edge display area A2 is less than or equal to 65% of the display brightness of the center display area A1), and the brightness uniformity of the display image seen by the human eye is poor.

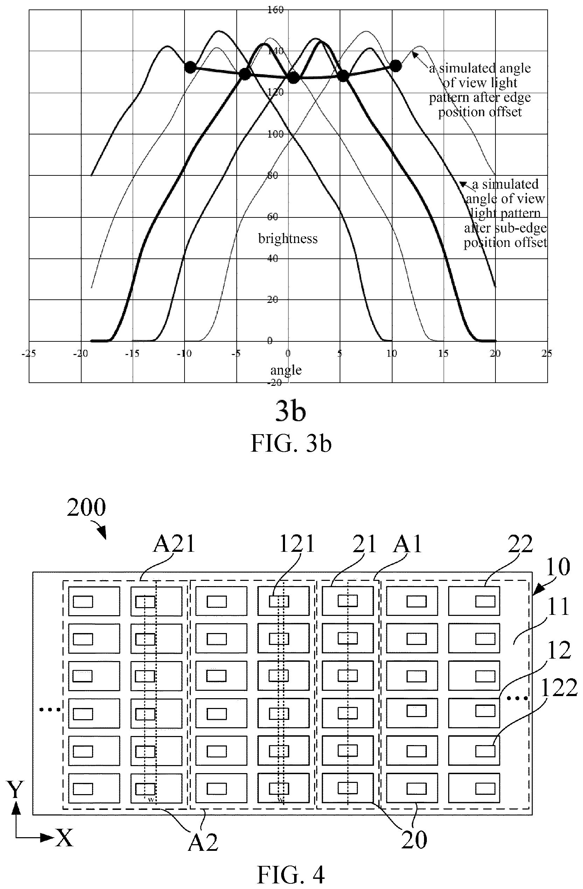

As shown in FIG. 3b, after the second light-emitting units 121 located in the light-emitting unit 12 of the edge display area A2 have been offset in the direction away from the center display area A1, when the display brightness of the center display area A1 is 120 to 140 candela per square meter, the display brightness of the edge display area A2 (for example, the display brightness corresponding to a horizontal angle of field of view of ±10° ) is 120 to 140 candela per square meter. That is, the display brightness of the center display area A1 differs slightly from the display brightness of the edge display area A2, so that the brightness of the edge area and the brightness of the center area of the display image viewed by the eye tend to be consistent (the display brightness of the edge display area A2 is greater than or equal to 90% of the display brightness of the center display area A1), thereby improving the brightness uniformity of the display image viewed by the human eye.

As shown in FIG. 4, an embodiment of the present application provides a display module 200, which differs from the display module 100 in that an edge display area A2 in the display module 200 includes a first display area and a second display area arranged at an interval in a first direction X, and a center display area A1 is located between the first display area and the second display area. Each of the first display area and the second display area includes a plurality of sub-display areas A21 arranged at intervals in the first direction X. Each of the plurality of sub-display areas A21 is provided with N second light-emitting unit groups, that is, the number of the second light-emitting unit groups in the plurality of sub-display areas A21 is equal. The offset distances w of the plurality of second light-emitting units 121 located in the same sub-display area A21 are equal, and N is a positive integer greater than or equal to 2, for example, N is equal to 3, 4, 5, 6, 7, 8, 9, 10 ... 15 ... 20 ... 25 ... 30 ... 50 ... 100 ....

In the first direction X, the offset distance w of the second light-emitting unit 121 in the sub-display area A21 further away from the center display area A1 is larger.

In the embodiment of the present application, when N is an odd number, the offset distance w of the plurality of second light-emitting units 121 in the same sub-display area A21 is equal to the offset distance w of the second light-emitting units 121 in the second light-emitting unit group located at the center of the sub-display area A21.

For example, the sub-display area A21 adjacent to the center display area A1, that is, the first sub-display area A21 in the first direction X, includes five second light-emitting unit groups, and the offset distance w of the plurality of second light-emitting units 121 in the five second light-emitting unit groups in the sub-display area A21 is equal to the offset distance w of the second light-emitting units 121 in the third second light-emitting unit group arranged in the sub-display area A21 in the direction away from the center display area A1.

In the embodiment of the present application, for example, the pitch of one light-emitting unit group is 200 microns, and the diameter of the corresponding lenses 20 is 200 microns (the radius is 100 microns). The difference between the offset distance w of the plurality of second light-emitting units 121 in the k-th one of the second light-emitting unit groups arranged in the direction away from the center display area A1 and the offset distance w of the plurality of second light-emitting units 121 in the (k-1)th one of the second light-emitting unit groups is 2 microns. Each of the offset distances w of the plurality of second light-emitting units 121 in the sub-display area A21 adjacent to the center display area A1 is 6 microns.

In the embodiment of the present application, when N is an even number, the offset distance w of the plurality of second light-emitting units 121 in the same sub-display area A21 is equal to the average value of the offset distances w of the second light-emitting units 121 in the N second light-emitting unit groups located in the sub-display area A21.

For example, the sub-display area A21 adjacent to the center display area that is, the first sub-display area A21 in the first direction X, includes six second light-emitting unit groups, the offset distance w of the plurality of the second light-emitting units 121 in the six second light-emitting unit groups in the sub-display area A21 is equal to the average value of the offset distances w of the second light-emitting units 121 in the six second light-emitting unit groups in the sub-display area A21.

In the embodiment of the present application, for example, the pitch of one light-emitting unit group is 200 microns, and the diameter of the corresponding lenses 20 is 200 microns (the radius is 100 microns). The difference between the offset distance w of the plurality of second light-emitting units 121 in the k-th one of the second light-emitting unit groups arranged in the direction away from the center display area A1 and the offset distance w of the plurality of second light-emitting units 121 in the (k-1)th one of the second light-emitting unit groups is 2 microns. Each of the offset distances w of the plurality of second light-emitting units 121 in the sub-display area A21 adjacent to the center display area A1 is 7 microns.

Alternatively, when N is an even number, the offset distance w of the plurality of second light-emitting units 121 in the same sub-display area A21 is equal to the average value of the offset distances w of the second light-emitting units 121 in the two second light-emitting unit groups located at the center of the sub-display area A21.

For example, the sub-display area A21 adjacent to the center display area that is, the first sub-display area A21 in the first direction X, includes six second light-emitting unit groups. The offset distance w of the plurality of second light-emitting units 121 in the six second light-emitting unit groups in the sub-display area A21 is equal to the average value of the offset distances w of the second light-emitting units 121 in the third one of the second light-emitting unit groups arranged in the direction away from the center display area A1 and the offset distance w of the second light-emitting unit groups 121 in the fourth one of the second light-emitting unit groups in the sub-display area A21.

According to the display module 200 provided in the present application, a plurality of second light-emitting units 121 in the N second light-emitting unit groups are offset by the same distance, so that the offset step length is enlarged while the process accuracy is reduced by N times, thereby avoiding the situation where the process accuracy is not high enough for the preparation of the plurality of offset second light-emitting units 121 in the single second light-emitting unit group due to the fact that the offset distance w is too small, and improving the brightness uniformity of the display module while reducing the process difficulty.

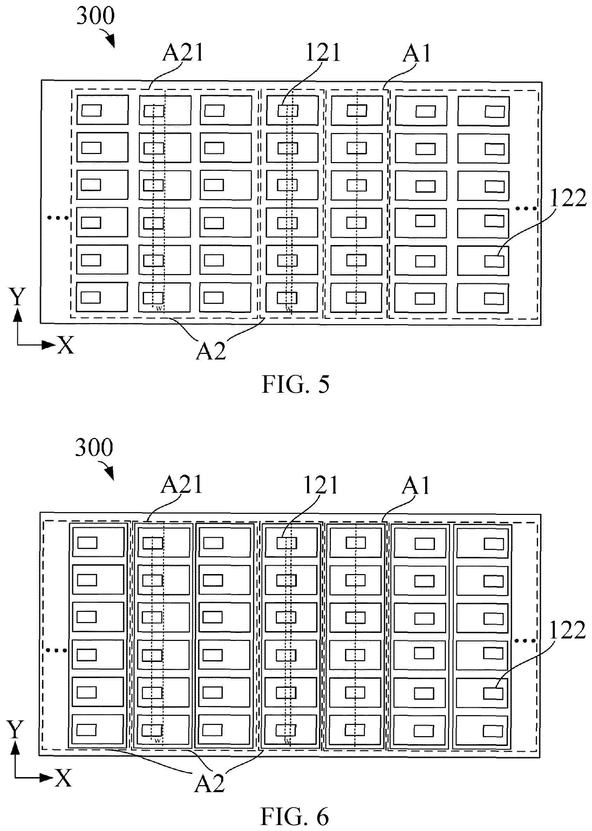

As shown in FIGS. 5 and 6, an embodiment of the present invention provides a display module 300, which differs from the display module 200 in that the number of the second light-emitting unit groups provided in a sub-display area A21 further away from the center display area A1 in the display module 300 is larger. That is, the numbers of the second light-emitting unit groups in the plurality of sub-display areas A21 in the direction away from the center display area A1 are not equal.

Specifically, the edge display area A2 in the display module 300 includes a first display area and a second display area, and the center display area A1 is located between the first display area and the second display area. The first display area and the second display area each include a plurality of sub-display areas A21 arranged in a direction away from the center display area A1. The first light-emitting unit group includes a plurality of first light-emitting units 121 arranged in the second direction Y, and the second light-emitting unit group includes a plurality of second light-emitting units 122 arranged in the second direction Y. The first light-emitting unit group and the second light-emitting unit group are arranged in the first direction X.

Specifically, the number of the second light-emitting unit groups in one sub-display area A21 faraway from the center display area A1 amongst two sub-display areas A21 that are adjacent in the direction away from the center display area A1 is t more than the number of the second light-emitting unit groups in the other sub-display area A21 that is close to the center display area and t is a positive integer greater than or equal to 1, for example, t is equal to 1, 2, 3, 4, 5, 6, 7, 8, 9, 10 ....

In FIG. 5, the number of the second light-emitting unit group(s) in the sub-display area A21 adjacent to the center display area A1 is shown to be 1. And the number of the second light-emitting unit groups in the sub-display area A21 adjacent to the center display area A1 in the direction away from the center display area A1 is shown to be 3.

In FIG. 6, the numbers of the second light-emitting unit groups in the plurality of sub-display areas A21 arranged in the direction away from the center display area A1 may be increased by one in sequence, for example, the numbers of the second light-emitting unit groups in the three sub-display areas A21 arranged in the direction away from the center display area A1 may be 2, 3, or 4, respectively.

Further, the numbers of the second light-emitting unit groups added to the plurality of sub-display areas A21 arranged in the direction away from the center display area A1 are not equal. For example, the number of the added second light-emitting unit groups is a multiple of 2, and the numbers of the second light-emitting unit groups in the three sub-display areas A21 arranged in the direction away from the center display area A1 are 2, 4, and 8, respectively.

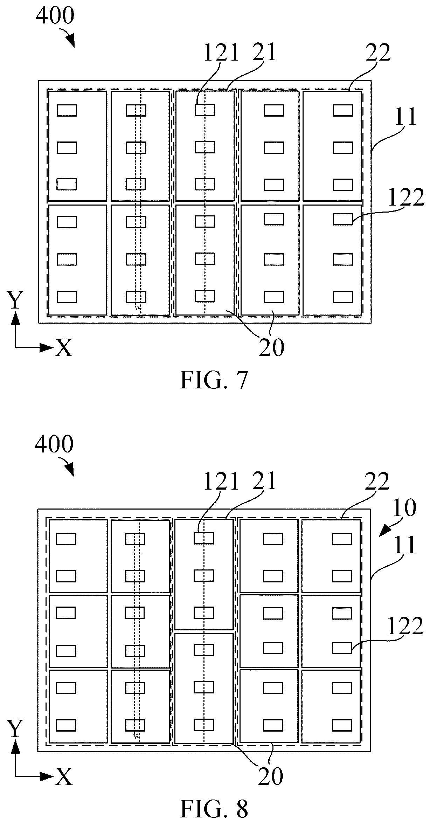

As shown in FIGS. 7 to 10, an embodiment of the present application provides a display module 400, which differs from the display module 100 in that a first light-emitting unit group in the display module 400 corresponds to n1 first lenses 21, a second light-emitting unit group corresponds to n2 second lenses 22, n1 and n2 may be equal or unequal, and n1 and n2 are both positive integers greater than or equal to 2, for example, n1 is equal to 3, 4, 5, 6, 7, 8, 9, 10 ..., and n2 is equal to 3, 4, 5, 6, 7, 8, 9, and 10 .... That is, the first light-emitting unit group corresponds to at least two first lenses 21, and the second light-emitting unit group corresponds to at least two second lenses 22. The first light-emitting unit group includes a plurality of first light-emitting units 121 arranged in the second direction Y, and the second light-emitting unit group includes a plurality of second light-emitting units 122 arranged in the second direction Y. The first light-emitting unit group and the second light-emitting unit group are arranged in the first direction X.

In FIG. 7, the first light-emitting unit group corresponds to two first lenses 21, and the second light-emitting unit group corresponds to two second lenses 22.

In FIG. 8, the first light-emitting unit group corresponds to two first lenses 21, and the second light-emitting unit group corresponds to three second lenses 22.

In the embodiment of the present application, the orthographic projection of the first lens 21 on the substrate 11 covers the orthographic projection of the m1 first light-emitting units 121 in the first light-emitting unit group on the substrate 11. The orthographic projection of the second lens 22 on the substrate 11 covers the orthographic projection of the main optical axis of the m2 second light-emitting units 121 in the second light-emitting unit group on the substrate 11. m1 and m2 may or may not be equal, and m1 and m2 are both positive integers greater than or equal to 2, for example, m1 is equal to 3, 4, 5, 6, 7, 8, 9, 10 ..., m2 is equal to 3, 4, 5, 6, 7, 8, 9, 10 ....

For example, the orthographic projection of the first lens 21 on the substrate 11 covers the orthographic projection of the two first light-emitting units 121 in the first light-emitting unit group on the substrate 11, and the orthographic projection of the second lens 22 on the substrate 11 covers the orthographic projection of the main optical axis of the two second light-emitting units 121 in the second light-emitting unit group on the substrate 11.

For example, the orthographic projection of the first lens 21 on the substrate 11 covers the orthographic projection of the two first light-emitting units 121 in the first light-emitting unit group on the substrate 11, and the orthographic projection of the second lens 22 on the substrate 11 covers the orthographic projection of the main optical axis of the three second light-emitting units 121 in the second light-emitting unit group on the substrate 11.

Specifically, the orthographic projection of the first lens 21 on the substrate 11 covers the orthographic projection of the at least two first light-emitting units 121 in the first light-emitting unit group on the substrate 11, and the orthographic projection of the second lens 22 on the substrate 11 covers the orthographic projection of the main optical axis of the at least two second light-emitting units 121 in the second light-emitting unit group on the substrate 11.

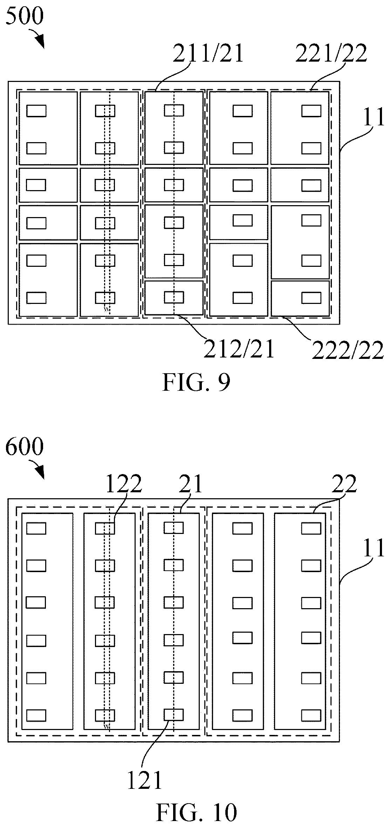

As shown in FIG. 9, an embodiment of the present application provides a display module 500, which differs from the display module 100 in that a first lens 21 in the display module 500 includes a first sub-lens 211 and a second sub-lens 212, where an orthographic projection of the first sub-lens 211 on a substrate 11 covers an orthographic projection of at least two first light-emitting units 121 in the first light-emitting unit group on the substrate 11, and an orthographic projection of the second sub-lens 212 on the substrate 11 covers an orthographic projection of one first light-emitting unit 121 in the first light-emitting unit group on the substrate 11. And/or, the second lens 22 includes a third sub-lens 221 and a fourth sub-lens 222, where an orthographic projection of the third sub-lens 221 on the substrate 11 covers orthographic projection of the main optical axis of at least two second light-emitting units 121 in the second light-emitting unit group on the substrate 11, an orthographic projection of the fourth sub-lens 222 on the substrate 11 covers orthographic projection of the main optical axis of one second light-emitting unit 121 in the second light-emitting unit group on the substrate 11.

As exemplarily shown in FIG. 9, the orthographic projection of the first sub-lens 211 on the substrate 11 covers the orthographic projection of the two first light-emitting units 121 in the first light-emitting unit group on the substrate 11, and the orthographic projection of the second sub-lens 212 on the substrate 11 covers the orthographic projection of the one first light-emitting unit 121 in the first light-emitting unit group on the substrate 11. The orthographic projection of the third sub-lens 221 on the substrate 11 covers the orthographic projection of the main optical axis of the two second light-emitting units 121 in the second light-emitting unit group on the substrate 11, and the orthographic projection of the fourth sub-lens 222 on the substrate 11 covers the orthographic projection of the main optical axis of the one second light-emitting unit 121 in the second light-emitting unit group on the substrate 11.

As shown in FIG. 10, an embodiment of the present application provides a display module 600, which differs from the display module 100 in that a plurality of first light-emitting units 121 in a first light-emitting unit group in the display module 600 correspond to a first lens 21, and a plurality of second light-emitting units 122 in a second light-emitting unit group correspond to a second lens 22. Specifically, the orthographic projection of the first lens 21 on the substrate 11 covers the orthographic projection of the plurality of first light-emitting units 121 in the first light-emitting unit group on the substrate 11, and the orthographic projection of the second lens 22 on the substrate 11 covers the orthographic projection of the main optical axis of the plurality of second light-emitting units 121 in the second light-emitting unit group on the substrate 11.

The shapes of the plurality of first lenses 21 may be the same or different, the shapes of the plurality of second lenses 22 may be the same or different, and the shapes of the first lenses 21 and the second lenses 22 may be the same or different.

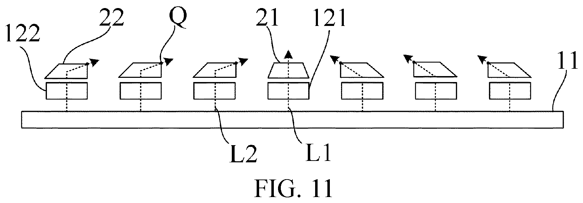

As shown in FIG. 11, an embodiment of the present application provides a display module 700, which differs from the display module 100 in that a first lens 21 and a first light-emitting unit 121 are provided in the display module 700 in a one-to-one correspondence, a second lens 22 and a second light-emitting unit 122 are provided in a one-to-one correspondence. Vector vertices Q of the first lens 21 and the second lens 22 have different positions, an orthographic projection of the vector vertex Q of the first lens 21 on the substrate 11 coincides with an orthographic projection of a main optical axis of the first light-emitting unit 121 on the substrate 11. And an orthographic projection of the vector vertex Q of the second lens 22 on the substrate 11 is located on one side of a main optical axis L2 of the second light-emitting unit 122 on the substrate 11 close to a centerline L1. That is, by adjusting the relative positions of the vector vertices Q of the second lenses 22 located on both sides of the centerline L1, the distribution of the offset angles of the main optical axis of the light rays emitted by the second lenses 22 located on both sides of the centerline L1 is mirror-symmetric with respect to the centerline L1.

The shapes of the plurality of first lenses 21 may be the same or different, the shapes of the plurality of second lenses 22 may be the same or different, and the shapes of the first lenses 21 and the second lenses 22 may be the same or different.

In another aspect, an embodiment of the present application further provides a field-of-view display device for a vehicle, the field-of-view display device including the display module and a windshield for reflecting light from the display module to an eye box, the eye box being an area in which a driver's eyes is located.

The foregoing description of a display module and a field-of-view display device for a vehicle, which are provided in embodiments of the present application, is merely intended to assist in understanding the core idea of the present application, and the foregoing description should not be construed as limiting the scope of protection of the present application.

## Claims

1. A display module comprising:
a light-emitting function layer comprising a substrate and a plurality of light-emitting units disposed on the substrate and arranged in an array, **characterized in that** the light-emitting function layer comprises a center display area and two edge display areas, the light-emitting function layer is configured such that one of the edge display areas, the center display area and the other one of the edge display areas are sequentially arranged in a first direction, the plurality of light-emitting units comprises one or more first light-emitting units and one or more second light-emitting units, the one or more first light-emitting units being located in the center display area, and the one or more second light-emitting units being located in the edge display areas; and
a plurality of dimming units disposed on a light-emitting surface of the light-emitting function layer and comprising one or more first dimming units and one or more second dimming units, the one or more first dimming units each corresponding to one of the one or more first light-emitting units and the one or more second dimming units each corresponding to one of the one or more second light-emitting units;
**characterized in that** the light-emitting function layer has a centerline perpendicular to the first direction on a plane in which the light-emitting function layer is located; a dimming main optical axis resulted from a main optical axis of the first light-emitting unit passing through the corresponding first dimming unit coincides with the main optical axis of the first light-emitting unit; a dimming main optical axis resulted from a main optical axis of the second light-emitting unit passing through the second dimming unit is disposed close to the centerline with respect to the main optical axis of the corresponding second light-emitting unit.

2. The display module according to claim 1, **characterized in that** the one or more first dimming units each comprise one or more first lenses, the one or more second dimming units each comprise one or more second lenses, the first lenses and the second lenses are identical in structure, the plurality of light-emitting units comprise one or more first light-emitting unit groups and one or more second light-emitting unit groups, the one or more first light-emitting unit groups each comprise a plurality of the first light-emitting units arranged at intervals in a second direction, the one or more second light-emitting unit groups each comprise a plurality of second light-emitting units arranged at intervals in the second direction, and the edge display areas each comprise a plurality of the second light-emitting unit groups arranged in sequence in the first direction; the first direction and the second direction are both located on the plane in which the light-emitting function layer is located, and the second direction is perpendicular to the first direction; and
**characterized in that** a center of the second lens is offset from the main optical axis of the corresponding second light-emitting unit towards the centerline in the first direction by an offset distance w, and the offset distances w of the centers of the second lenses from the main optical axis of the corresponding plurality of second light-emitting units in the same second light-emitting unit group are equal.

3. The display module according to claim 2, comprising any two of the second light-emitting unit groups in the first direction, **characterized in that** the offset distance w of the second light-emitting unit in the second light-emitting unit group away from the center display area is greater than the offset distance w of the other second light-emitting unit in the second light-emitting unit group close to the center display area.

4. The display module according to claim 2, **characterized in that** in the k-th one of the second light-emitting unit groups arranged in a direction away from the center display area, the offset distance is obtained according to the following formula: w = *a*/(m/2)*(k-1),
**characterized in that** a denotes a target distance by which a dimming main optical axis resulted from the main optical axis of the second light-emitting unit in the second light-emitting unit group farthest from the center display area passing through the corresponding second dimming unit is offset away from the centerline in the first direction with respect to an orthographic projection of the main optical axis of the second light-emitting unit on the substrate, m denotes a total number of the light-emitting units arranged at intervals in the first direction on the light-emitting function layers, and k denotes the k-th one of the second light-emitting unit groups arranged in the direction away from the center display area.

5. The display module according to claim 2, **characterized in that** the two edge display areas are respectively a first display area and a second display area, the center display area is located between the first display area and the second display area, and the one or more second light-emitting units located in the first display area are mirror-symmetric with the one or more second light-emitting units located in the second display area with respect to the centerline; and
a distribution of offset angles of the dimming main optical axis of the second lenses at both sides of the centerline with respect to the main optical axis of the corresponding second light-emitting units is mirror-symmetrical with respect to the centerline.

6. The display module according to claim 5, **characterized in that** each of the first display area and the second display area comprises a plurality of sub-display areas arranged at intervals in the first direction, each of the plurality of sub-display areas is provided with N second light-emitting unit groups of the second light-emitting unit groups, the offset distances w of the plurality of second light-emitting units located in the same sub-display area are equal, and N is a positive integer greater than or equal to 2; and
in the first direction, the offset distance w of the second light-emitting unit in the sub-display area further away from the center display area is larger.

7. The display module according to claim 6, **characterized in that** when N is an odd number, the offset distances w of the plurality of the second light-emitting units in the same sub-display area are equal to the offset distances w of the second light-emitting units in the second light-emitting unit group located in the center of the sub-display area; and
when N is an even number, the offset distances w of the plurality of the second light-emitting units in the same sub-display area are equal to an average value of the offset distances w of the second light-emitting units in the N second light-emitting unit groups located in the sub-display area.

8. The display module according to claim 6, **characterized in that** the number of the second light-emitting unit groups provided in the sub-display area further away from the center display area is larger.

9. The display module according to claim 2, **characterized in that** the one or more first light-emitting unit groups each correspond to at least one of the one or more first lenses, and the one or more second light-emitting unit groups each correspond to at least one of the one or more second lenses.

10. The display module according to claim 9, **characterized in that** an orthographic projection of the first lens on the substrate covers orthographic projections of the plurality of first light-emitting units in the first light-emitting unit group on the substrate, and an orthographic projection of the second lens on the substrate covers orthographic projections of the plurality of second light-emitting units in the second light-emitting unit group on the substrate.

11. The display module according to claim 9, **characterized in that** each first lens comprises a first sub-lens and a second sub-lens, **characterized in that** an orthographic projection of the first sub-lens on the substrate covers the orthographic projections of at least two of the first light-emitting units in the first light-emitting unit group on the substrate, and an orthographic projection of the second sub-lens on the substrate covers the orthographic projection of one of the first light-emitting units in the first light-emitting unit group on the substrate; and/or,
the second lens comprises a third sub-lens and a fourth sub-lens, **characterized in that** an orthographic projection of the third sub-lens on the substrate covers the orthographic projections of at least two of the second light-emitting units in the second light-emitting unit group on the substrate, and an orthographic projection of the fourth sub-lens on the substrate covers the orthographic projection of one of the second light-emitting units in the second light-emitting unit group on the substrate.

12. The display module according to claim 1, **characterized in that** a shape of the lens comprises at least one of a cylinder, a cone, a circular cone, and a trapezoid.

13. The display module according to claim 1, **characterized in that** the one or more first dimming units each comprise a first lens, the one or more second dimming units each comprise a second lens, vector vertices of the first lens and the second lens have different positions, an orthographic projection of the vector vertex of the first lens on the substrate coincides with an orthographic projection of the main optical axis of the corresponding first light-emitting unit on the substrate, and an orthographic projection of the vector vertex of the second lens on the substrate is located on a side of an orthographic projection of the main optical axis of the corresponding second light-emitting unit on the substrate close to the centerline.

14. A field-of-view display device for a vehicle, **characterized in that** the field-of-view display device comprises a display module and a windshield for reflecting light from the display module to an eye box, the display module comprising:
a light-emitting function layer comprising a substrate and a plurality of light-emitting units disposed on the substrate and arranged in an array, **characterized in that** the light-emitting function layer comprises a center display area and two edge display areas, the light-emitting function layer is configured such that one of the edge display areas, the center display area and the other one of the edge display areas are sequentially arranged in a first direction, the plurality of light-emitting units comprises one or more first light-emitting units and one or more second light-emitting units, the one or more first light-emitting units being located in the center display area, and the one or more second light-emitting units being located in the edge display areas; and
a plurality of dimming units disposed on a light-emitting surface of the light-emitting function layer and comprising one or more first dimming units and one or more second dimming units, the one or more first dimming units each corresponding to one of the one or more first light-emitting units and the one or more second dimming units each corresponding to one of the one or more second light-emitting units;
**characterized in that** the light-emitting function layer has a centerline perpendicular to the first direction on a plane in which the light-emitting function layer is located; a dimming main optical axis resulted from a main optical axis of the first light-emitting unit passing through the corresponding first dimming unit coincides with the main optical axis of the first light-emitting unit; a dimming main optical axis resulted from a main optical axis of the second light-emitting unit passing through the second dimming unit is disposed close to the centerline with respect to the main optical axis of the corresponding second light-emitting unit.

15. The field-of-view display device for a vehicle according to claim 14, **characterized in that** the one or more first dimming units each comprise one or more first lenses, the one or more second dimming units each comprise one or more second lenses, the first lenses and the second lenses are identical in structure, the plurality of light-emitting units comprise one or more first light-emitting unit groups and one or more second light-emitting unit groups, the one or more first light-emitting unit groups each comprise a plurality of the first light-emitting units arranged at intervals in a second direction, the one or more second light-emitting unit groups each comprise a plurality of second light-emitting units arranged at intervals in the second direction, and the edge display areas each comprise a plurality of the second light-emitting unit groups arranged in sequence in the first direction; the first direction and the second direction are both located on the plane in which the light-emitting function layer is located, and the second direction is perpendicular to the first direction; and
**characterized in that** a center of the second lens is offset from the main optical axis of the corresponding second light-emitting unit towards the centerline in the first direction by an offset distance w, and the offset distances w of the centers of the second lenses from the main optical axis of the corresponding plurality of second light-emitting units in the same second light-emitting unit group are equal.

16. The field-of-view display device for a vehicle according to claim 15, comprising any two of the second light-emitting unit groups in the first direction, **characterized in that** the offset distance w of the second light-emitting unit in the second light-emitting unit group away from the center display area is greater than the offset distance w of the other second light-emitting unit in the second light-emitting unit group close to the center display area.

17. The field-of-view display device for a vehicle according to claim 15, in the k-th one of the second light-emitting unit groups arranged in a direction away from the center display area, the offset distance is obtained according to the following formula: w = *a*/(m/2)*(k-1),
**characterized in that** a denotes a target distance by which a dimming main optical axis resulted from the main optical axis of the second light-emitting unit in the second light-emitting unit group farthest from the center display area passing through the corresponding second dimming unit is offset away from the centerline in the first direction with respect to an orthographic projection of the main optical axis of the second light-emitting unit on the substrate, m denotes a total number of the light-emitting units arranged at intervals in the first direction on the light-emitting function layers, and k denotes the k-th one of the second light-emitting unit groups arranged in the direction away from the center display area.

18. The field-of-view display device for a vehicle according to claim 15, **characterized in that** the two edge display areas are respectively a first display area and a second display area, the center display area is located between the first display area and the second display area, and the one or more second light-emitting units located in the first display area are mirror-symmetric with the one or more second light-emitting units located in the second display area with respect to the centerline; and
a distribution of offset angles of the dimming main optical axis of the second lenses at both sides of the centerline with respect to the main optical axis of the corresponding second light-emitting units is mirror-symmetrical with respect to the centerline.

19. The field-of-view display device for a vehicle according to claim 18, **characterized in that** each of the first display area and the second display area comprises a plurality of sub-display areas arranged at intervals in the first direction, each of the plurality of sub-display areas is provided with N second light-emitting unit groups of the second light-emitting unit groups, the offset distances w of the plurality of second light-emitting units located in the same sub-display area are equal, and N is a positive integer greater than or equal to 2; and
in the first direction, the offset distance w of the second light-emitting unit in the sub-display area further away from the center display area is larger.

20. The field-of-view display device for a vehicle according to claim 19, **characterized in that** when N is an odd number, the offset distances w of the plurality of the second light-emitting units in the same sub-display area are equal to the offset distances w of the second light-emitting units in the second light-emitting unit group located in the center of the sub-display area; and
when N is an even number, the offset distances w of the plurality of the second light-emitting units in the same sub-display area are equal to an average value of the offset distances w of the second light-emitting units in the N second light-emitting unit groups located in the sub-display area.
